# FASCICULE DE BREVET EUROPEEN

(11) **EP 3 890 328 B1**
(45) Date de publication et mention de la délivrance du brevet: **28.06.2023**
(21) Numéro de dépôt: 21157964.4
(22) Date de dépôt: 18.02.2021
(51) Int. Cl.: H04N 21/233, H04N 21/242, H04N 21/43, H04R 27/00, H04N 21/8547

(54) **PROCÉDÉ DE GESTION D'UN FLUX AUDIO LU DE MANIÈRE SYNCHRONISÉE SUR UNE HORLOGE DE RÉFÉRENCE**
VERFAHREN ZUR VERWALTUNG EINES AUF EINEN REFERENZTAKT SYNCHRONISIERTEN AUDIOSTROMS
METHOD FOR MANAGING AN AUDIO STREAM PLAYED SYNCHRONOUSLY USNIG A REFERENCE CLOCK

(30) Priorité: 01.04.2020 FR 2003258
(43) Date de publication de la demande: 06.10.2021
(73) Titulaire: SAGEMCOM BROADBAND SAS, 92500 Rueil-Malmaison (FR)
(72) Inventeur: BERGER, Jérôme, 92500 RUEIL MALMAISON (FR); BOUVIGNE, Gabriel, 92500 RUEIL MALMAISON (FR)
(74) Mandataire: Decorchemont, Audrey Véronique Christèle

(56) Documents cités:
- EP-A1- 1 815 713
- EP-B1- 1 815 713
- US-A1- 2007 116 057
- MARIO MONTAGUD ET AL: "Enhanced adaptive RTCP-based Inter-Destination Multimedia Synchronization approach for distributed applications", COMPUTER NETWORKS, ELSEVIER, AMSTERDAM, NL, vol. 56, no. 12, 10 May 2012 (2012-05-10), pages 2912-2933, XP028400811, ISSN: 1389-1286, DOI: 10.1016/J.COMNET.2012.05.003 [retrieved on 2012-05-18]
- SJOBERG M WESTERLUND ERICSSON A LAKANIEMI S WENGER NOKIA J: "RTP Payload Format for the Extended Adaptive Multi-Rate Wideband (AMR-WB+) Audio Codec; rfc4352.txt", RTP PAYLOAD FORMAT FOR THE EXTENDED ADAPTIVE MULTI-RATE WIDEBAND (AMR-WB+) AUDIO CODEC; RFC4352.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 January 2006 (2006-01-01), XP015044785,

## Description

L'invention concerne le domaine de la restitution audio via un ou des équipements de restitution audio.

### ARRIERE PLAN DE L'INVENTION

Il est aujourd'hui très courant, dans les installations multimédia domestiques modernes, de connecter un équipement décodeur, de type boitier décodeur STB à un ou plusieurs équipements de restitution audio.

En effet les équipements de restitution audio peuvent ainsi être groupés pour pouvoir diffuser simultanément un même flux audio et ainsi améliorer l'expérience acoustique de l'utilisateur. Par exemple, deux équipements de restitution audio peuvent être agencés dans des pièces différentes d'une habitation, la diffusion du flux audio de manière simultanée par lesdits équipements permettant à l'utilisateur de circuler entre les deux pièces sans interrompre son écoute.

Ainsi il est connu d'imposer aux équipements de restitution audio de diffuser le flux audio de manière synchronisée en se basant sur une horloge externe. Par exemple on a recours à des enceintes connectées utilisant un protocole de type NTP ou PTP pour recevoir l'horloge externe, enceintes cadençant ensuite la lecture du flux audio via une horloge matérielle interne configurable. Typiquement cette horloge est réalisée par un composant de type PLL (« *Phase-Locked Loop* ») qui permet de subdiviser une horloge de référence (fournie par un quartz). Les PLL permettent de configurer finement la subdivision appliquée, et l'enceinte connectée associée ajuste dynamiquement les paramètres de subdivision pour que l'horloge matérielle interne configurable générée par la PLL suive au plus près l'horloge externe.

Bien qu'efficace cette solution oblige à doter chaque enceinte connectée d'une horloge matérielle configurable ce qui la rend coûteuse et complexe à mettre en oeuvre.

Le document US 2007/0116057 prose un procédé pour déterminer un décalage d'horloge dans lequel un dispositif de téléphonie reçoit des paquets RTCP SR d'un dispositif de téléphonie distant, chaque paquet comprenant un horodatage NTP et un horodatage RTP. Le dispositif détermine à partir de deux ou plusieurs des paquets SR reçus un premier décalage entre une horloge de carte de support distante par rapport à l'horloge du dispositif de téléphonie distant. En outre, le dispositif détermine, à partir de deux ou plusieurs paquets SR RTCP transmis, un deuxième décalage entre une horloge de carte de support locale par rapport à l'horloge du dispositif.

Le document WO 2006/053704 concerne un serveur destiné à distribuer un flux de données audio, correspondant à un signal audio, à deux ou plusieurs haut-parleurs dans un réseau. Pour chaque haut-parleur, le serveur détermine une vitesse relative de l'horloge du haut-parleur par rapport à une vitesse en temps réel, et pour chaque flux de données transmis à un haut-parleur, le serveur détermine à partir d'une vitesse relative respective, des échantillons respectifs du signal audio destiné à être modifié par rapport à ladite vitesse relative.

L'article " Enhanced adaptive RTCP-based Inter-Destination Multimedia Synchronization approach for distributed applications " propose une version évoluée d'une approche IDMS (pour « synchronisation multimédia inter-destination » permettant d'assurer la synchronisation simultanée des points de diffusion) basée sur le protocole RTCP. A cet effet, au cours d'une session RTP, les récepteurs actifs envoient régulièrement des RTCP RR EXT pour s'informer de la QoS (retard du réseau, RTT, gigue ou taux de perte) et pour fournir le point de lecture local de chaque i-ème récepteur en transmettant les données suivantes :
- numéro de séquence de 16 bits de l'unité de média en cours de lecture par le récepteur considéré;
- heure de l'horloge murale de 64 bits à laquelle ledit récepteur a commencé la lecture de cet unité de média;
- identifiant du groupe de synchronisation de 8 bits auquel ledit récepteur appartient.

Le document « RTP Payload Format for the Extended Adaptive Multi-Rate Wideband (AMR-WB+) Audio Codée » spécifie un format de charge utile du protocole de transport en temps réel (RTP) pour les signaux audios codés AMR-WB+ (Extended Adaptive Multi-Rate Wideband). Le codée AMR-WB+ est une extension audio du codec vocal AMR-WB. Il comprend les types de trames AMR-WB et un certain nombre de nouveaux types de trames conçus pour prendre en charge la musique de haute qualité.

### OBJET DE L'INVENTION

Un but de l'invention est de proposer un procédé facilitant la synchronisation de la lecture d'un flux audio sur une horloge de référence par au moins un équipement de restitution audio.

### RESUME DE L'INVENTION

En vue de la réalisation de ce but, on propose selon l'invention un procédé de gestion d'un flux audio selon la revendication 1.

De la sorte, l'invention permet à un équipement de restitution audio de lire un flux audio de manière synchronisée sur une horloge de référence sans avoir besoin de ressources matérielles spéciales au niveau dudit équipement de restitution audio.

L'invention s'avère ainsi simple et peu coûteuse à mettre en œuvre.

Optionnellement, l'information de correspondance consiste en la valeur de ladite deuxième information d'identification et ladite heure mémorisée. Optionnellement, l'information de correspondance consiste en un coefficient directeur d'une droite de régression linéaire entre ladite deuxième information et ladite heure mémorisée.

Optionnellement, le procédé comporte en outre les étapes additionnelles suivantes implémentées dans l'équipement de restitution audio de : calculer pour au moins un paquet N reçu par l'équipement de restitution audio une information d'identification caractéristique d'un horodatage prévue pour le paquet suivant N+1 en additionnant l'information d'identification caractéristique d'un horodatage du paquet qui vient d'être réceptionné et sa durée, et de comparer ladite information d'identification prévue avec l'information d'identification du paquet N+1 lors de sa réception.

Optionnellement si l'information d'identification du paquet N+1 est postérieure à l'information d'identification prévue, alors l'équipement de restitution audio joue des échantillons de compensation pour une durée correspondant à la différence entre l'information d'identification prévue et l'information d'identification du paquet N+1.

Optionnellement, les échantillons de compensation sont des silences et/ou des copies des derniers échantillons joués. L'invention concerne également un équipement de restitution audio adapté pour mettre en œuvre le procédé tel que précité.

L'invention concerne également un procédé de gestion d'un flux audio lu de manière synchronisée sur une horloge de référence et transmis par au moins un équipement source, le procédé comportant au moins les étapes suivantes implémentées dans ledit équipement source :
- Découper le flux audio en paquets, chaque paquet comprenant une succession d'échantillons audio;
- Associer à chaque paquet une information d'identification caractéristique d'un d'horodatage dudit paquet, information qui est donc représentative de l'heure à laquelle un échantillon audio prédéterminé dudit paquet devrait être joué par l'équipement de restitution audio;
- Recevoir un message comprenant au moins une information de correspondance entre l'information d'identification caractéristique d'un horodatage d'au moins l'un des paquets et une heure donnée par l'horloge de référence caractéristique du moment où l'échantillon audio prédéterminé dudit paquet a été injecté dans le tampon mémoire de l'équipement de restitution audio tel que précité ;
- Ajuster, en fonction de ladite information de correspondance, la vitesse de lecture du flux audio en fonction de ladite information de correspondance et/ou le paquet suivant avant de l'envoyer.

Optionnellement, l'étape d'ajuster le paquet suivant est mise en œuvre par ajustement du nombre d'échantillons audio contenus dans le paquet.

Optionnellement, on ajuste le nombre d'échantillons en supprimant ou en ajoutant des échantillons audio audit paquet.

Optionnellement, on ajuste le paquet suivant en appliquant un filtre de rééchantillonnage audit paquet. Optionnellement, on ajuste le nombre d'échantillons en conservant une taille de paquet identique à celle du paquet qui a été précédemment transmis.

L'invention concerne également un équipement source adapté pour mettre en œuvre le procédé tel que précité. L'invention concerne également une installation comprenant au moins un premier équipement de restitution audio tel que précité et un deuxième équipement de restitution audio configuré pour transmettre le flux audio audit premier équipement de restitution audio, le deuxième équipement de restitution audio ajustant lui-même ledit flux si l'autre équipement de restitution audio ne le lit pas à la bonne vitesse.

L'invention concerne également une installation comprenant au moins un premier équipement de restitution audio tel que précité et un équipement source tel que précité. L'invention concerne également un programme d'ordinateur comprenant des instructions qui conduisent un équipement de restitution audio tel que précité à exécuter le procédé tel que précité.

L'invention concerne également un support d'enregistrement lisible par ordinateur, sur lequel est enregistré le programme d'ordinateur tel que précité.

L'invention concerne également un programme d'ordinateur comprenant des instructions qui conduisent un équipement source tel que précité à exécuter le procédé tel que précité.

L'invention concerne également un support d'enregistrement lisible par ordinateur, sur lequel est enregistré le programme d'ordinateur tel que précité.

D'autres caractéristiques et avantages de l'invention ressortiront à la lecture de la description qui suit de mises en œuvre particulières non limitatives de l'invention.

### BREVE DESCRIPTION DES DESSINS

L'invention sera mieux comprise à la lumière de la description qui suit en référence aux figures annexées parmi lesquelles :
[Fig. 1] la figure 1 représente schématiquement une installation permettant de mettre en œuvre l'invention ;
[Fig. 2] la figure 2 représente schématiquement différentes étapes d'une mise en œuvre particulière de l'invention au niveau d'un équipement de restitution audio de l'installation représentée à la figure 1 ;
[Fig. 3] la figure 3 représente schématiquement différentes étapes d'une mise en œuvre particulière de l'invention au niveau d'un équipement source de l'installation représentée à la figure 1.

### DESCRIPTION DETAILLEE DE L'INVENTION

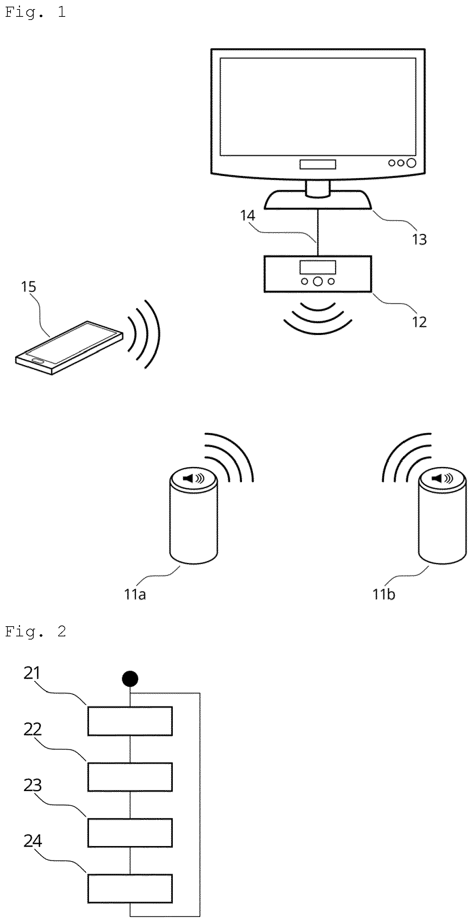

En référence à la figure 1, un exemple d'installation pouvant mettre en œuvre l'invention va être à présent décrit.

L'installation est une installation multimédia comprenant un équipement décodeur 12 relié ici à un équipement de restitution vidéo, qui est ici en réalité un équipement de restitution audio/vidéo 13, et à au moins un équipement de restitution audio. L'équipement décodeur 12 joue ici le rôle d'un équipement source pour les deux équipements de restitution audio 11a, 11b. Les équipements de restitution audio 11a, 11b sont par ailleurs distincts dans le cas présent de l'équipement décodeur 12 mais également de l'équipement de restitution audio/vidéo 13.

Par ailleurs, l'installation comporte également un appareil 15 permettant de commander au moins les équipements de restitution audio 11a, 11b et de préférence au moins les équipements de restitution audio 11a, 11b et l'équipement décodeur 12 et de préférence toute l'installation. L'appareil 15 est dans le cas présent distinct de l'équipement décodeur 12 mais également de l'équipement de restitution audio/vidéo 13 mais également de chacun des équipements de restitution audio 11a, 11b. L'équipement décodeur 12 est ici un boîtier décodeur, l'équipement de restitution audio/vidéo 13 est une télévision, et les équipements de restitution audio 11a, 11b sont des enceintes externes et connectées audit boitier décodeur. Quant à l'appareil 15, il s'agit ici d'un téléphone portable intelligent (ou « smartphone) ou bien encore une tablette, le téléphone ou la tablette comprenant des moyens de stockage d'une application dédiée au moins au contrôle de l'équipement décodeur 12 et des équipements de restitution audio 11a, 11b, l'exécution de cette application permettant ainsi de commander au moins l'équipement décodeur 12 et les équipements de restitution audio 11a, 11b.

En service, l'équipement décodeur 12 acquiert au niveau d'une interface de communication de l'équipement décodeur 12, un flux multimédia audio/vidéo qui peut provenir d'un ou de plusieurs réseaux de diffusion. Les réseaux de diffusion peuvent être de tout type. Par exemple, le réseau de diffusion est un réseau de télévision par satellite, et l'équipement décodeur 12 reçoit un flux d'entrée audio/vidéo à travers une antenne parabolique. En variante, le réseau de diffusion est une connexion Internet et l'équipement décodeur 12 reçoit le flux d'entrée audio/vidéo à travers ladite connexion Internet. Selon une autre variante, le réseau de diffusion est un réseau de télévision numérique terrestre (TNT) ou un réseau de télévision par câble. De manière globale, le réseau de diffusion peut être de source diverse : satellite, câble, IP, TNT (réseau de Télévision Numérique Terrestre), flux audio/vidéo stocké localement, etc.

L'équipement décodeur 12 comporte des moyens de traitement permettant entre autres de traiter le flux d'entrée audio/vidéo.

Par ailleurs l'équipement de restitution audio/vidéo 13 est connecté à une sortie audio/vidéo de l'équipement décodeur 12 et chaque équipement de restitution audio 11a, 11b est connecté à une sortie audio de l'équipement décodeur 12.

Par « sortie audio/vidéo », on entend une sortie sur laquelle l'équipement décodeur 12 applique au moins un signal audio/vidéo pour mettre en œuvre une restitution audio et une restitution vidéo via (au moins) un équipement de restitution audio/vidéo 13 (ici la télévision). Par « sortie audio », on entend une sortie sur laquelle l'équipement décodeur 12 applique au moins un signal audio pour mettre en œuvre une restitution audio via (au moins) un équipement de restitution audio 11a, 11b (ici les enceintes connectées externes). En réalité le signal audio (ou flux audio) est découpé en paquets d'échantillons audio et est donc transmis par paquets à chaque équipement de restitution audio visé.

En conséquence, chaque équipement de restitution audio 11a, 11b comporte des moyens de traitement qui lui sont propres pour traiter le flux audio transmis par l'équipement décodeur 12. Les moyens de traitement comportent par exemple un processeur et/ou un calculateur et/ou un microordinateur ... Dans le cas présent, les moyens de traitement comportent un processeur.

Les moyens de traitement comportent une zone mémoire dans laquelle est enregistré un logiciel dont l'exécution permet la lecture du flux audio transmis par l'équipement décodeur 12. Plus précisément la lecture du flux audio est exécutée par réception des paquets d'échantillons audio de l'équipement décodeur 12 et par injection desdits échantillons dans un tampon mémoire d'entrée de l'équipement de restitution audio considéré. Le tampon mémoire est agencé en entrée de moyens de diffusion de l'équipement de restitution audio considéré. Les moyens de diffusion comportent par exemple une carte son, un convertisseur analogique-numérique, un ou plusieurs haut-parleurs ...

Le tampon mémoire possède une certaine capacité (par exemple de 200 millisecondes) et les moyens de diffusion jouent ainsi les échantillons présents dans ce tampon mémoire à un rythme régulier (par exemple de 48 kilohertz) . Lorsque le niveau de remplissage du tampon mémoire tombe en dessous d'un seuil fixé (par exemple à 190 millisecondes), les moyens de diffusion émettent une interruption à destination des moyens de traitement. À la suite de cela, les moyens de traitement injectent de nouveaux échantillons audio dans le tampon : plus précisément le logiciel provoque alors la copie d'un nouveau bloc d'échantillons audio (par exemple un bloc de 10 millisecondes) à la fin du tampon mémoire.

Par ailleurs, comme indiqué, l'appareil 15 permet de transmettre des ordres à l'équipement décodeur 12 et aux équipements de restitution audio 11a, 11b ce qui permet à l'utilisateur de pouvoir gérer l'installation via l'appareil 15 par exemple via une interface graphique de commande de l'appareil 15 tel qu'un écran tactile de l'appareil 15.

Typiquement, l'utilisateur peut utiliser l'appareil 15 pour envoyer un ordre à l'équipement décodeur 12 afin que l'équipement décodeur 12 envoie un flux audio à destination du ou des équipements de restitution audio 11a, 11b sélectionnés pour que ceux-ci diffusent le flux audio de manière synchronisée. Dans ce cas, l'équipement décodeur 12 peut envoyer des canaux différents aux différents équipements de restitution audio 11a, 11b. Par exemple dans le cas d'un flux audio stéréo comportant deux canaux, l'équipement décodeur 12 peut envoyer le canal de gauche à l'un des équipements de restitution audio 11a et le canal de droite à un autre des équipements de restitution audio 11b. L'équipement décodeur 12 peut également transmettre les deux canaux droit et gauche à un seul des deux équipements de restitution audio 11a, qui ne restituera que le canal de gauche et transféra le canal de droite (ou l'intégralité du flux audio) à l'autre équipement de restitution audio droit 11b qui ne restituera lui-même que le canal de droite.

L'utilisateur peut également envoyer un ordre à l'équipement décodeur 12 via l'appareil 15 afin que l'équipement décodeur 12 envoie un flux audio vers un seul des équipements de restitution audio (ou vers les deux équipements de restitution audio 11a, 11b) et un flux vidéo (ou un flux audio/vidéo) vers l'équipement de restitution audio/vidéo 13 afin que le ou les équipements de restitution audio sélectionnés 11a, 11b diffusent le flux audio de manière synchronisée avec la vidéo (ou avec la vidéo et le son) diffusée par l'équipement de restitution audio/vidéo 13.

On retient que l'on considère ici que les équipements de restitution audio 11a, 11b retranscrivant un même flux audio appartiennent à un même groupe et ce que chaque équipement de restitution audio 11a, 11b retranscrive le flux dans son intégralité ou le retranscrive partiellement par diffusion d'un seul des canaux dudit flux (dans le cas par exemple d'un flux stéréo).

Selon les configurations commandées par l'utilisateur, les groupes d'équipement de restitution audio 11a, 11b peuvent donc évoluer dans le temps.

Afin de permettre la synchronisation entre les équipements de restitution audio 11a, 11b de l'installation et/ou l'équipement de restitution audio/vidéo 13 et/ou entre plusieurs flux (audio et/ou vidéo) circulant dans l'installation, des données de synchronisation sont échangées au moins entre l'équipement décodeur 12 et les équipements de restitution audio 11a, 11b d'une part et entre l'équipement décodeur 12 et l'équipement de restitution audio/vidéo 13 d'autre part.

Selon un mode particulier de réalisation, l'équipement décodeur 12 envoie un flux audio à un ou des équipements de restitution audio 11a, 11b en utilisant un protocole RTP. Ce protocole prévoit en effet que le flux audio soit découpé en paquets et que l'en-tête de chaque paquet comporte des données de synchronisation sous la forme d'un champ d'horodatage (champ « timestamp » décrit dans la section 5.1 de la RFC 3550 associée audit protocole). Selon un autre mode particulier de réalisation, l'équipement décodeur 12 envoie un flux audio à un ou des équipements de restitution audio sous la forme d'un flux « transport » MPEG transmis dans des paquets UDP, le flux « transport » MPEG permettant lui aussi d'associer des données de synchronisation (sous la forme d'un horodatage) aux différents paquets. Par ailleurs, les données de synchronisation comportent également une information caractéristique de l'horloge de référence qui est distincte du flux audio.

Dans le cas présent, l'horloge de référence est l'horloge interne de l'équipement décodeur 12.

Par exemple, l'équipement décodeur 12 envoie son horloge aux équipements de restitution audio 11a, 11b en utilisant un protocole NTP.

Par exemple, l'équipement décodeur 12 envoie directement aux équipements de restitution audio 11a, 11b au moins :
- le flux audio sous la forme de paquets via un protocole RTP ou MPEG ;
- son horloge en utilisant un protocole NTP,
l'horloge n'étant pas contenu dans le flux audio de sorte que le flux audio et l'horloge soient transmis de manière distincte.

La connexion entre l'équipement décodeur 12 et l'équipement de restitution audio/vidéo 13 peut être filaire ou sans fil. Tout type de technologie peut être utilisé pour réaliser cette connexion : optique, radioélectrique, etc. La connexion peut ainsi avoir différentes natures « physiques » (par exemple en HDMI, *Toslink,* RCA, etc.) et/ou utiliser différents protocoles « informatiques » (par exemple en *Bluetooth,* UPnP*, Airplay, Chromecast,* Wifi*,* etc) .

La connexion entre l'équipement décodeur 12 et chaque équipement de restitution audio 11a, 11b, par lequel circule la liaison audio, est ici non filaire. Tout type de technologie peut être utilisé pour réaliser cette connexion : optique, radioélectrique, etc. La connexion peut ainsi utiliser différents protocoles « informatiques » (par exemple en *Bluetooth,* UPnP, *Airplay, Chromecast,* Wifi, etc). Alternativement, la connexion pourra être filaire par exemple via un protocole Ethernet.

Ainsi et selon une option non limitative, l'équipement de restitution audio/vidéo 13 est en relation HDMI 14 avec l'équipement décodeur 12 et les équipements de restitution audio 11a, 11b sont connectés par un réseau local à l'équipement décodeur 12. Le réseau local est par exemple un réseau sans fil de type Wi-Fi. Selon une autre variante, le réseau local comporte un routeur Wi-Fi, l'équipement décodeur 12 est relié audit routeur Wi-Fi par une connexion filaire de type Ethernet ou est relié au routeur par une connexion sans fil de type Wi-Fi. Par ailleurs, et indépendamment de la liaison entre le routeur et l'équipement décodeur 12, les équipements de restitution audio 11a, 11b sont connectés au routeur Wi-Fi par une connexion sans fil de type Wi-Fi ou par une connexion filaire de type Ethernet.

De la même manière, l'appareil 15 communique avec l'équipement décodeur 12 et avec les équipements de restitution audio 11a, 11b via des communications préférentiellement non filaires. Tout type de technologie peut être utilisé pour réaliser ces communications : optique, radioélectrique, etc. Ces communications peuvent ainsi utiliser différents protocoles « informatiques » (par exemple en *Bluetooth,* UPnP*, Airplay, Chromecast,* Wifi, etc). Ainsi et selon une option non limitative, l'appareil 15 est également connecté via le réseau local à l'équipement décodeur 12 et aux différents équipements de restitution audio 11a, 11b.

On va à présent s'attacher à décrire comment l'installation va permettre la lecture synchronisée d'un flux audio donné. On rappelle que chacun des équipements de restitution audio sélectionné 11a, 11b reçoit de l'équipement décodeur 12 un flux audio à diffuser se présentant sous la forme de paquets d'échantillons associés chacun à une information d'identification caractéristique d'un horodatage du paquet considéré, ladite information étant ici directement l'horodatage dudit paquet (via un protocole RTP ou MPEG) et sera appelée par la suite première information d'horodatage. Cette première information d'horodatage est par exemple liée au premier échantillon de chaque paquet. Ainsi en service l'équipement décodeur 12 transmet à l'équipement de restitution audio sélectionné des paquets d'échantillons qui sont placés dans une file d'attente (contenue dans l'équipement décodeur 12 et/ou l'équipement de restitution audio) avant injection dans le tampon mémoire. On note donc qu'un paquet d'échantillons n'a pas nécessairement la même durée qu'un bloc d'échantillons. En réalité, il n'y a pas d'équivalence entre les paquets reçus par l'équipement de restitution audio sélectionné et les blocs injectés dans son tampon mémoire. En effet, les performances de communication entre l'équipement de restitution audio sélectionné et l'équipement décodeur 12 sont meilleures si les paquets reçus ne sont pas trop petits mais il vaut mieux injecter des petits blocs dans le tampon mémoire pour maintenir un taux de remplissage élevé dans ledit tampon mémoire et en limiter la latence. De manière non limitative, les paquets reçus ont une durée 3 à 7 fois supérieure à celle des paquets injectés et par exemple 4 fois supérieure. Par exemple les paquets reçus ont une durée de l'ordre de 40 millisecondes, voire plus, alors que les blocs injectés ont une durée de l'ordre de 10 millisecondes.

En conséquence et comme illustré à la figure 2, l'équipement de restitution audio met en œuvre les étapes suivantes.

À une étape 21, le processeur de chaque équipement de restitution audio attend de recevoir une interruption de la part des moyens de diffusion dudit équipement, ladite interruption signifiant qu'il y a assez de place dans le tampon mémoire pour recevoir un nouveau bloc d'échantillons.

À une étape 22, en cas de réception d'une interruption, le processeur obtient de la file d'attente un bloc d'échantillons à injecter dans le tampon mémoire.

A une étape 23, le processeur détermine une deuxième information d'horodatage associée audit bloc comme par exemple une deuxième information d'horodatage associée au premier échantillon dudit bloc.

Comme indiqué ci-dessus, les paquets reçus par l'équipement de restitution audio et les blocs injectés dans son tampon mémoire n'ont pas les mêmes durées. Par conséquent, le processeur calcule pour un, plusieurs ou tous les blocs d'un paquet qui vient d'être reçu un décalage entre le premier échantillon dudit paquet et le premier échantillon du bloc considéré, bloc qui vient donc d'être injecté.

Le processeur multiplie ce décalage par un taux de conversion qui permet de convertir un nombre d'échantillons en une information d'horodatage. Puis le processeur ajoute le résultat à la première information d'horodatage (i.e. l'information d'horodatage du paquet reçu) afin d'obtenir la deuxième information d'horodatage (i.e. l'information d'horodatage du bloc injecté).

Par exemple, dans le cas du protocole RTP, la première information d'horodatage est souvent déjà exprimée directement en nombre d'échantillons, par conséquent le taux de conversion vaut 1.

Le processeur mémorise ladite deuxième information.

À une étape 24, le processeur injecte le bloc d'échantillons dans le tampon mémoire et mémorise l'heure donnée par l'horloge NTP de référence au moment où le premier échantillon du bloc est injecté (appelée par la suite première heure NTP). Ensuite le processeur retourne à l'étape 21 pour ce qui concerne le tampon mémoire.

Optionnellement, il est possible que des paquets envoyés par l'équipement décodeur 12 ne soient pas reçus par l'équipement de restitution audio sélectionné. Cela crée un trou dans les données mais surtout cela peut aussi entraîner une injection plus rapide des paquets qui suivront ce qui risquerait de fausser les déterminations effectuées à l'étape 23.

Pour pallier ce problème, de préférence, l'équipement de restitution audio sélectionné calcule à chaque paquet reçu une information d'horodatage prévue pour le paquet suivant en additionnant la première information d'horodatage du paquet qui vient d'être réceptionné et sa durée.

À réception du paquet suivant, l'équipement de restitution audio compare la première information d'horodatage du nouveau paquet et l'information d'horodatage prévue. Si la première information d'horodatage du nouveau paquet est postérieure à l'information d'horodatage prévue, alors cela signifie que des paquets envoyés par l'équipement décodeur 12 n'ont pas été reçus par l'équipement de restitution audio sélectionné. Dans ce cas ledit équipement de restitution audio injecte dans le tampon mémoire des échantillons de compensation pour une durée correspondant à la différence entre l'information d'horodatage prévue et la première information d'horodatage du nouveau paquet, avant d'injecter les échantillons du nouveau paquet. Les échantillons de compensation sont par exemple des silences, ou bien sont une copie des derniers échantillons injectés dans le tampon mémoire.

Dans tous les cas on a indiqué qu'après injection, le processeur retournait à l'étape 21 pour ce qui concernait le tampon mémoire.

Pour le reste, l'équipement de restitution audio envoie à l'équipement décodeur 12 un message comprenant au moins une information de correspondance entre la première information d'horodatage et la première heure NTP. Le message comprend ainsi la deuxième information d'horodatage (qui est donc lié à la première information d'horodatage) et la première heure NTP.

Ce message peut par exemple prendre la forme d'une notification JSON-RPC ou d'un événement UPnP.

Ce message peut être envoyé de manière régulière par exemple une fois par seconde.

Ce message peut être émis spontanément par l'équipement de restitution audio. Alternativement, l'équipement décodeur 12 peut interroger l'équipement de restitution audio afin d'obtenir la deuxième information d'horodatage et la première heure NTP mémorisées. Alternativement, lorsque le protocole utilisé pour envoyer les paquets d'échantillons de l'équipement décodeur 12 à l'équipement de restitution audio prévoit des messages d'acquittement de réception, alors la deuxième information d'horodatage et la première heure NTP peuvent être transmises par l'équipement de restitution audio à l'équipement décodeur 12 dans lesdits messages d'acquittement.

Ainsi l'équipement décodeur 12 reçoit de la part de chaque équipement de restitution audio sélectionné la deuxième information d'horodatage et la première heure NTP correspondante.

À partir de là l'équipement décodeur 12 déduit si chacun des équipements de restitution audio joue trop lentement ou trop rapidement et quelle action il convient de prendre pour limiter cette dérive et assurer une synchronisation dans la lecture du flux audio.

Optionnellement, l'équipement décodeur 12 calcule ainsi le coefficient directeur d'une droite de régression linéaire entre la deuxième information d'horodatage et la première heure NTP.

Puis l'équipement décodeur 12 calcule le rapport entre le coefficient directeur calculé et un coefficient directeur théorique prédéterminé. Le coefficient directeur théorique prédéterminé est par exemple pris égal au taux d'échantillonnage du flux audio (soit généralement bien que non limitativement 48kilohertz).

Si le rapport est égal à un 1 cela signifie que l'équipement de restitution audio considéré est bien synchronisé et ne joue ni trop lentement ni trop rapidement.

Dans le cas contraire, une action est prise. Ce rapport est typiquement égal au rythme auquel il faut ajouter ou supprimer des échantillons dans le flux audio pour assurer une lecture synchronisée par l'équipement de restitution audio désynchronisé :
- Si le rapport vaut 1, alors il ne faut ni ajouter ni supprimer d'échantillons.
- Si le rapport est plus petit que 1, alors l'équipement de restitution audio joue les échantillons trop lentement et il faut donc supprimer des échantillons dans le flux audio pour assurer une lecture synchronisée par ledit équipement de restitution audio. Par exemple, si le rapport vaut 0,9 alors il faut de préférence supprimer un échantillon sur 10 dans le flux audio.
- Si le rapport est plus grand que 1, alors l'équipement de restitution audio joue les échantillons trop vite et il faut donc ajouter des échantillons dans le flux audio pour assurer une lecture synchronisée. Par exemple, si le rapport vaut 1,05 alors il faut ajouter un échantillon tous les 20 échantillons.

Selon une première variante, l'équipement décodeur 12 découpe comme à son habitude le flux en paquets, puis ajoute ou supprime des échantillons dans chaque paquet (selon le rapport calculé précédemment) avant d'envoyer les paquets à l'équipement de restitution audio visé. Comme la proportion d'échantillons ajoutés ou supprimés est faible, l'équipement décodeur 12 n'applique pas de filtre de ré-échantillonnage et se contente donc ici de supprimer directement les échantillons en trop ou bien de rajouter directement des échantillons supplémentaires (l'équipement décodeur peut par exemple dupliquer des échantillons du flux audio à cet effet). Optionnellement l'équipement décodeur 12 compresse les paquets d'échantillons avant de les transmettre à l'équipement de restitution audio. Ainsi, avec cette première variante, au cours du temps, l'équipement décodeur 12 peut envoyer des paquets de taille variable à l'équipement de restitution audio visé.

Selon une deuxième variante, l'équipement décodeur 12 découpe comme à son habitude le flux en paquets puis applique un filtre de ré-échantillonnage à chaque paquet avec un taux de ré-échantillonnage égal au rapport calculé précédemment.

Ainsi au cours du temps l'équipement décodeur 12 peut envoyer des paquets de taille variable à l'équipement de restitution audio visé.

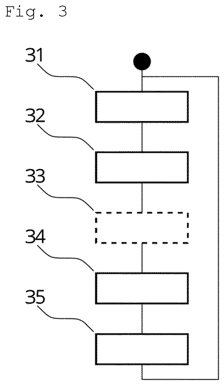

La figure 3 illustre un exemple possible d'application de la deuxième variante.

À une étape 31, l'équipement décodeur 12 extrait un paquet d'échantillons du flux audio et lui associe une première information d'horodatage.

À une étape 32, l'équipement décodeur 12 ré-échantillonne le paquet d'échantillons en fonction du rapport calculé précédemment (entre le coefficient directeur calculé et le coefficient directeur théorique prédéterminé).

À une étape optionnelle 33, l'équipement décodeur 12 compresse le paquet d'échantillons.

À une étape 34, l'équipement décodeur 12 envoie le paquet d'échantillons ou le paquet compressé vers l'équipement de restitution audio.

À une étape 35, l'équipement décodeur 12 regarde s'il a reçu un nouveau message de l'équipement de restitution audio contenant une nouvelle deuxième information d'horodatage. L'équipement décodeur 12 met si nécessaire à jour le coefficient directeur calculé le cas échéant.

Puis l'équipement décodeur 12 retourne à l'étape 31 pour générer le paquet suivant.

Selon une troisième variante, l'équipement décodeur 12 ré-échantillonne le flux audio (soit indirectement en appliquant un filtre de ré-échantillonnage soit directement en supprimant ou en ajoutant des échantillons) avant de le découper en paquets et d'envoyer les paquets à l'équipement de restitution audio visé. Optionnellement l'équipement décodeur 12 compresse les paquets d'échantillons avant de les transmettre à l'équipement de restitution audio.

Dans cette troisième variante, les paquets envoyés peuvent avoir tous la même taille puisque le ré-échantillonnage s'effectue avant le découpage en paquets.

On a ainsi proposé une solution dans laquelle l'information de correspondance entre l'information d'identification caractéristique d'un horodatage d'un paquet donné et une horloge de référence (via l'heure mémorisée) est communiquée par l'équipement de restitution audio à l'équipement source et non pas l'inverse comme dans l'art antérieur. Ceci permet à l'équipement source de prendre des actions pour assurer la synchronisation.

De façon avantageuse, les équipements de restitution audio sont alors des éléments courants du commerce, le processeur précité n'ayant pas besoin de spécificité particulière pour mettre en œuvre les étapes décrites.

D'autres mises en œuvre de l'invention sont bien entendu envisageables.

Ainsi selon une deuxième mise en œuvre de l'invention, les équipements de restitution audio 11a, 11b ne sont pas synchronisés via l'équipement source comme dans la première mise en œuvre qui vient d'être décrite (l'équipement source étant en réalité l'équipement décodeur 12). En revanche lesdits équipements sont regroupés dans au moins un groupe et la synchronisation est mise en œuvre par le groupe lui-même.

À cet effet, l'un des équipements de restitution audio « maitre » récupère le flux audio et transmet ledit flux audio à l'autre équipement de restitution audio (soit en intégralité soit en partie seulement ; par exemple l'équipement de restitution audio maitre pourrait diffuser le canal gauche d'un flux et ne transmettre que le canal droit à l'autre équipement de restitution audio).

Dans cette configuration, l'équipement de restitution audio maitre, en plus de restituer le canal gauche, joue le rôle précédemment dévolu de l'équipement décodeur 12. C'est donc l'équipement de restitution audio maitre qui va ajuster les échantillons destinés à l'équipement de restitution audio (selon par exemple une des variantes précitées de ré-échantillonnage décrites en regard de la première mise en oeuvre), afin de préserver une synchronisation audio entre les deux enceintes.

Selon une première option, l'horloge de référence est alors l'horloge de l'équipement de restitution audio maitre et celui-ci transmet aussi ladite horloge de référence à l'autre équipement de restitution audio par exemple via un protocole NTP. Selon une deuxième option, les équipements de restitution audio se mettent d'accord sur une horloge de référence commune, par exemple grâce au protocole PTP. Cette deuxième mise en œuvre permet la synchronisation de deux équipements de restitution audio de manière autonome, alors que seul l'un des équipements de restitution audio est doté de moyens de traitement supérieurs permettant d'ajuster des échantillons (l'équipement de restitution audio maitre). L'autre équipement de restitution audio est doté ici de moyens de traitement standards potentiellement dépourvus de capacités de traitement du flux audio.

Selon une troisième mise en oeuvre, dans certains cas, l'équipement source peut contrôler sa vitesse de lecture du flux audio, par exemple parce qu'il lit un fichier sur un périphérique de stockage.

Dans ce cas, préférentiellement, l'équipement source ajuste sa vitesse de lecture à la valeur moyenne des vitesses de lecture des équipements de restitution audio auxquels le flux audio est envoyé (vitesse de lecture pouvant être déduite du rapport entre les coefficients directeurs précité).

Ainsi le traitement du flux audio appliqué pour chaque équipement de restitution audio est minimisé puisque l'on agit sur la vitesse de lecture de l'équipement source en priorité. Ceci permet d'améliorer la qualité de la diffusion du flux audio.

En particulier s'il y a un seul équipement de restitution audio, alors l'équipement source ajuste sa vitesse de lecture à l'horloge interne dudit équipement de restitution audio et il n'est alors pas nécessaire d'effectuer de traitement du flux audio, ce qui préserve intégralement la qualité du flux audio original.

Alternativement, l'équipement source peut ajuster sa vitesse de lecture à la valeur médiane des vitesses de lecture des équipements de restitution audio auxquels le flux audio est envoyé, ce qui permet de minimiser les traitements puisqu'il y a alors au moins un équipement de restitution audio pour lequel il n'est pas nécessaire de traiter le flux audio ce qui permet là encore d'améliorer la qualité de la diffusion du flux audio.

On retient que l'on peut également appliquer cette adaptation de vitesse de lecture du flux à l'équipement de restitution audio maitre de la deuxième mise en oeuvre. Selon une quatrième mise en oeuvre, il peut arriver exceptionnellement, lors d'une session de lecture d'un flux audio, que l'un des équipements de restitution audio présente une dérive d'horloge interne importante et globalement régulière. Ceci peut par exemple se produire si les composants gérant l'horloge interne de l'équipement de restitution audio sont défectueux.

Par exemple une telle dérive peut être une dérive moyenne comprise entre 0.5 et 1.5%. De préférence, une telle dérive est une dérive moyenne de 1%, comprise dans 95% des cas entre +0.8 et +1.2%.

Dans un tel cas, afin de minimiser les possibles perturbations sonores liées à un trop grand ajustement des paquets destinés à l'équipement de restitution audio défectueux, on effectue de préférence des ajustements pour les paquets à la fois au niveau de l'équipement de restitution audio défectueux et à la fois au niveau de l'équipement source (si sa vitesse de lecture est ajustable comme indiqué en regard de la troisième mise en oeuvre) et/ou bien entre les différents équipements de restitution audio d'un même groupe, ces ajustements étant ainsi individuellement plus faibles qu'un seul gros ajustement destiné à l'équipement de restitution audio défectueux. Par exemple l'ajustement est réparti entre l'équipement source et l'équipement de restitution audio cible : L'équipement source va ajuster sa vitesse de lecture de la moitié de la dérive et ajustera les échantillons destinés à l'équipement de restitution audio de l'autre moitié de la dérive.

Par exemple l'ajustement est réparti entre l'équipement de restitution audio non défectueux et l'équipement de restitution audio cible : les échantillons destinés à l'équipement de restitution audio non défectueux sont ajustés à la moitié de la dérive et les échantillons destinés à l'équipement de restitution audio cible de l'autre moitié de la dérive.

Bien entendu, l'invention n'est pas limitée aux mises en œuvre et modes de réalisation décrits ci-dessus et on pourra y apporter des variantes de réalisation sans sortir du cadre de l'invention.

Ainsi, bien qu'ici l'équipement décodeur soit un boîtier décodeur, l'équipement décodeur pourra être tout équipement capable de réaliser un décodage audio, tel qu'un décodeur audio/vidéo, un décodeur vidéonumérique et par exemple une console de jeu, un ordinateur, une *smart*-*TV*, une tablette numérique, un téléphone portable, un décodeur de télévision numérique, un boitier décodeur STB, etc. De manière générale, bien qu'ici l'équipement source soit un équipement décodeur, l'équipement source pourra être tout autre équipement capable de fournir un flux audio aux équipements de restitution audio tel qu'une chaîne Hi-Fi numérique.

Bien qu'ici l'équipement source et l'appareil soit distincts, la source et l'appareil pourront faire partie d'un même ensemble unitaire. Selon une variante, l'appareil pourra être intégré à l'équipement source, par exemple être intégré à un équipement décodeur. Selon une autre variante, l'équipement source pourra être intégré à l'appareil. Ainsi, cela pourra être directement l'appareil qui transmette un flux audio à au moins l'un des équipements de restitution audio. Ainsi, l'équipement source pourra être par exemple intégré dans l'appareil de type téléphone portable et/ou tablette, l'appareil réalisant les fonctions « équipement source » et « gestion des équipements de restitution audio » grâce à des applications adaptées. Il pourra s'agir de deux applications distinctes, l'une assurant la fonction « gestion des équipements de restitution audio » et l'autre assurant la fonction « équipement source » ou bien les deux fonctions peuvent être réalisées par une même application combinant les deux fonctions.

De même bien qu'ici l'équipement source soit distinct de tous les équipements de restitution audio, l'équipement source et au moins l'un des équipements de restitution audio pourront ne pas être distincts et faire partie d'un même ensemble unitaire. Cela sera par exemple le cas si le ou les équipements de restitution audio traitent des flux audio directement en provenance d'un réseau externe de type Internet. On pourra ainsi avoir un ou des équipements de restitution audio qui seront des équipements de restitution audio intelligents (tels que des enceintes connectées encore appelées « smartspeakers ») pouvant ainsi fonctionner sans équipement décodeur externe car intégrant directement l'équipement source, ces équipements diffusant un flux audio directement en provenance d'un réseau externe de type Internet, ou directement en provenance d'un réseau local. Cela pourra également être le cas si l'équipement source comporte lui-même des haut-parleurs (par exemple si l'équipement source est un équipement décodeur comprenant des haut-parleurs).

Le flux audio pourra ainsi être fourni à l'un ou les équipements de restitution audio différemment de ce qui a été indiqué par exemple à l'aide d'une transmission LAN via l'appareil, à l'aide d'une liaison Bluetooth, ou encore par récupération du flux audio depuis un emplacement réseau comme précité (type LAN ou WAN). Cela pourra également être un équipement de restitution audio qui récupère le flux audio et le transmette à un ou plusieurs autres équipements du même groupe.

De même bien qu'ici l'appareil soit distinct de tous les équipements de restitution audio, l'appareil et au moins l'un des équipements de restitution audio pourront ne pas être distincts et faire partir d'un même ensemble unitaire. Dans un même ensemble unitaire, on pourra ainsi avoir au moins un appareil, un équipement de restitution audio et un équipement source qui ne seront donc pas distincts. L'installation pourra également comporter plusieurs équipement sources et/ou plusieurs appareils sachant que les équipements sources, les appareils, les équipements de restitution audio pourront être couplés entre eux au moins par deux dans un ou plusieurs ensemble unitaires.

Bien qu'ici l'appareil soit un téléphone portable, l'appareil pourra être tout autre élément muni ou lié à une interface graphique de commande. L'appareil pourra ainsi être de nature variée : appareil dédié, téléphone portable ou tablette exécutant une application dédiée, ordinateur exécutant une application dédiée, ou appareil tiers (console de jeux, décodeur de télévision numérique, smart TV...) ayant une fonctionnalité dédiée ou exécutant une application dédiée. L'appareil pourra être différent de ce qui a été décrit mais sera de préférence un appareil mobile par rapport aux différents équipements de restitution audio afin qu'un utilisateur puisse facilement le manipuler (en particulier le déplacer d'une pièce à une autre). L'appareil sera ainsi de dimensions et de masse permettant à un utilisateur de le déplacer seul en le portant et de sorte que l'utilisateur puisse manipuler ledit appareil sans avoir nécessairement besoin de le poser sur un support.

Par ailleurs, bien qu'ici l'équipement de restitution audio soit une enceinte connectée externe, ceci pourrait être un autre équipement muni d'un haut-parleur, par exemple une barre de son, un système audio relié à un bridge Wi-Fi/audio, une enceinte non connectée ...

Bien qu'ici les équipements de restitution audio soient reliés à l'équipement source par un réseau sans fil de type Wi-Fi, les équipements de restitution audio pourront être reliés à l'équipement source autrement par exemple par un réseau filaire de type Ethernet, ou par une connexion sans fil de type Bluetooth, ou tout autre moyen de connexion apte à faire transiter des données audio et, préférentiellement, des données de synchronisation.

On pourrait avoir un nombre plus important d'équipements de restitution audio et/ou d'équipement source et/ou d'appareils que ce qui a été indiqué.

On pourra ainsi n'avoir qu'un seul équipement de restitution audio dans l'installation telle qu'une barre de son ou tout autre équipement de restitution audio multicanaux.

Plusieurs appareils pourront être présents dans l'installation, et ces appareils pourront être de natures variées : appareil dédié, téléphone portable ou tablette exécutant une application contrôleur, ordinateur exécutant une application contrôleur, ou appareil tiers (console de jeux, décodeur de télévision numérique, smart TV...) ayant une fonctionnalité contrôleur ou exécutant une application contrôleur.

Les différentes communications évoquées pourront être filaires en place d'être non filaires.

On pourra transmettre les ordres entre l'appareil et les équipements de restitution audio soit directement soit indirectement en passant par l'équipement source. On pourra aussi transmettre les ordres entre l'équipement source et les équipements de restitution audio soit directement soit indirectement en passant par l'appareil.

On pourra avoir recours à d'autres protocoles que ce qui a été indiqué. Par exemple on pourra avoir recours à un ou des protocoles PTP, SPD, RTCP, RTP ... pour la synchronisation entre les équipements de restitution audio et/ou les flux circulant dans l'installation en place d'un protocole NTP.

Bien entendu les valeurs numériques données dans la présente demande sont purement indicatives et donc non limitatives.

Bien entendu les différents modes de réalisation, mises en œuvre, options ... décrites peuvent être mixées entre elles. Ainsi, la répartition des étapes précitées entre l'équipement source et l'équipement de restitution audio pourra être différente de ce qui a été indiqué. Par exemple ce pourra être l'un des équipements de restitution audio qui calculera le coefficient directeur et éventuellement le rapport entre le coefficient directeur calculé et le coefficient directeur théorique prédéterminé et qui transmettra optionnellement à l'équipement source ledit coefficient directeur calculé et/ou ledit rapport dans le message, l'information de correspondance comprenant ou étant constitué dudit coefficient et/ou dudit rapport. Une partie des étapes pourra être implémenté dans l'appareil en place de l'équipement source et/ou des équipements de restitution audio.

Bien qu'ici l'information caractéristique d'un horodatage d'un paquet soit directement ledit horodatage (de type horodatage RTP ou encore horodatage MPEG), ladite information pourra être différente. Ladite information pourra par exemple un simple numéro, tel qu'un numéro de séquence, par exemple si les paquets sont contigus.

Bien qu'ici le ou les équipements de restitution audio envoient un message à destination de l'équipement source comprenant l'information de correspondance pour tous les paquets joués, le ou les équipements de restitution audio pourront n'envoyer un tel message que pour une partie seulement des paquets joués par exemple selon un intervalle de temps prédéterminé.

Bien qu'ici les moyens de traitement attendent une notification d'aptitude à recevoir un nouveau bloc d'échantillons audio de la part du tampon mémoire avant d'y injecter de nouveaux blocs, les moyens de traitement pourront être configurés pour essayer systématiquement d'injecter de nouveaux blocs en association avec un tampon mémoire qui demeurera bloquée tant qu'un seuil prédéterminé de place dans ledit tampon mémoire n'ait pas été atteint. Bien qu'ici l'horloge de référence soit l'horloge interne de l'équipement source, l'horloge de référence pourra être différente et par exemple être une horloge externe à l'installation telle qu'un serveur public sur Internet (type serveur NTP) ou bien encore une horloge négociée entre l'équipement source et les équipements de restitution audio par exemple par un protocole pair à pair (type PTP). Dans le cas d'une synchronisation sur un serveur NTP, celui-ci pourra donc être un serveur public sur Internet ou bien directement l'horloge interne de l'équipement source. Les équipements de restitution audio pourront ainsi transmettre des requêtes NTP dans les deux cas au serveur concerné.

Par ailleurs, l'horloge interne de l'équipement décodeur pourra être différente selon l'origine du flux. Par exemple si le flux audio provient d'un flux d'entrée VOD ou si le flux audio provient d'un flux enregistré sur le disque dur de l'équipement décodeur, l'horloge de l'équipement décodeur sera alors libre et proviendra directement de son quartz. En revanche si le flux audio provient d'un flux d'entrée TV (type satellite, câble ou TNT), l'horloge de l'équipement décodeur sera asservie sur l'horloge de diffusion via des champs PCR de la norme MPEG.

On pourra envisager que ce qui a été dit pour la synchronisation des équipements de restitution audio soit également appliqué à l'équipement de restitution vidéo (ou audio/vidéo).

L'heure mémorisée d'injection dans le tampon mémoire pourra être représentative de l'heure donnée par l'horloge de référence lorsque le premier échantillon d'au moins l'un des paquets est joué (puisque le laps de temps entre le moment de l'entrée dans le tampon mémoire et le moment effectif de la diffusion est figé).

## Revendications

1. Procédé de gestion d'un flux audio lu de manière synchronisée sur une horloge de référence par au moins un équipement de restitution audio, l'équipement de restitution audio comprenant un tampon mémoire d'entrée, le procédé comportant au moins les étapes suivantes implémentées dans ledit équipement de restitution audio :
- recevoir le flux audio, le flux audio se présentant sous la forme de paquets, chaque paquet comprenant une succession d'échantillons audio associés à au moins une première information d'identification caractéristique d'un horodatage dudit paquet ;
- jouer les échantillons audio contenus dans chaque paquet ;
le procédé comportant en outre les étapes suivantes implémentées dans l'équipement de restitution audio de :
- Découper chaque paquet reçu en blocs d'échantillons audio;
- Déterminer au moins une deuxième information d'horodatage correspondant au moins à un bloc d'échantillons audio, et ce à partir de la première information d'identification caractéristique d'un horodatage du paquet dont est extrait ledit bloc et d'un nombre d'échantillons entre un échantillon particulier dudit paquet et un échantillon donné dudit bloc, la deuxième information d'horodatage étant ainsi déterminé par :
Point 1 : calcul du décalage entre l'échantillon particulier et l'échantillon donnée ;
Point 2 : multiplication du décalage obtenu au point 1 par un taux de conversion pour convertir un nombre d'échantillons en une information d'horodatage ;
Point 3 : addition du résultat du point 2 à la première information d'horodatage pour obtenir la deuxième information d'horodatage ;
- Injecter le bloc dans le tampon mémoire en copiant ledit bloc à la fin du tampon mémoire lorsque le niveau de remplissage du tampon mémoire tombe en dessous d'un seuil donné ;
le procédé comprenant les étapes de :
- mémoriser une heure donnée par l'horloge de référence au moment où l'échantillon donné du bloc est injecté dans le tampon mémoire ;
- envoyer un message comprenant au moins une information de correspondance entre la première information d'identification caractéristique d'un horodatage dudit paquet et l'heure mémorisée, l'information de correspondance comprenant ladite deuxième information d'horodatage correspondant audit bloc et ladite heure mémorisée.

2. Procédé selon la revendication 1 dans lequel l'information de correspondance consiste en la valeur de ladite deuxième information d'identification et ladite heure mémorisée.

3. Procédé selon la revendication 1 dans lequel l'information de correspondance consiste en un coefficient directeur d'une droite de régression linéaire entre ladite deuxième information et ladite heure mémorisée.

4. Procédé selon l'une des revendications 1 à 3, comportant les étapes additionnelles suivantes implémentées dans l'équipement de restitution audio de : calculer pour au moins un paquet N reçu par l'équipement de restitution audio une information d'identification caractéristique d'un horodatage prévue pour le paquet suivant N+1 en additionnant l'information d'identification caractéristique d'un horodatage du paquet qui vient d'être réceptionné et sa durée, et de comparer ladite information d'identification prévue avec l'information d'identification du paquet N+1 lors de sa réception.

5. Procédé selon la revendication 4, dans lequel si l'information d'identification du paquet N+1 est postérieure à l'information d'identification prévue, alors l'équipement de restitution audio joue des échantillons de compensation pour une durée correspondant à la différence entre l'information d'identification prévue et l'information d'identification du paquet N+1.

6. Procédé selon la revendication 5, dans lequel les échantillons de compensation sont des silences et/ou des copies des derniers échantillons joués.

7. Équipement de restitution audio adapté pour mettre en œuvre le procédé selon l'une des revendications 1 à 6.

8. Procédé de gestion d'un flux audio lu de manière synchronisée sur une horloge de référence et transmis par au moins un équipement source, le procédé comportant au moins les étapes suivantes implémentées dans ledit équipement source :
• Première étape : Découper le flux audio en paquets, chaque paquet comprenant une succession d'échantillons audio ;
• Deuxième étape : Associer à chaque paquet une information d'identification caractéristique d'un d'horodatage dudit paquet, information qui est donc représentative de l'heure à laquelle un échantillon audio prédéterminé dudit paquet devrait être joué par un équipement de restitution audio ;
• Troisième étape : Recevoir un message comprenant au moins une information de correspondance entre l'information d'identification caractéristique d'un horodatage d'au moins l'un des paquets et une heure donnée par l'horloge de référence caractéristique du moment où l'échantillon audio prédéterminé dudit paquet a été injecté dans un tampon mémoire d'un équipement de restitution audio selon la revendication 7 ;
• Quatrième étape : Ajuster, en fonction de ladite information de correspondance, la vitesse de lecture du flux audio en fonction de ladite information de correspondance et/ou le paquet suivant avant de l'envoyer.

9. Procédé selon la revendication 8 dans lequel l'étape d'ajuster le paquet suivant est mise en œuvre par ajustement du nombre d'échantillons audio contenus dans le paquet.

10. Procédé selon la revendication 9 dans lequel on ajuste le nombre d'échantillons en supprimant ou en ajoutant des échantillons audio audit paquet.

11. Procédé selon la revendication 8 ou la revendication 9, dans lequel on ajuste le paquet suivant en appliquant un filtre de rééchantillonnage audit paquet.

12. Procédé selon l'une des revendications 10 ou 11 dans lequel on ajuste le nombre d'échantillons en conservant une taille de paquet identique à celle du paquet qui a été précédemment transmis.

13. Équipement source adapté pour mettre en œuvre le procédé selon l'une des revendications 8 à 12.

14. Installation comprenant au moins un premier équipement de restitution audio selon la revendication 7 et un deuxième équipement de restitution audio selon la revendication 13 configuré pour transmettre le flux audio audit premier équipement de restitution audio, le deuxième équipement de restitution audio ajustant lui-même ledit flux si l'autre équipement de restitution audio ne le lit pas à la bonne vitesse.

15. Installation comprenant au moins un premier équipement de restitution audio selon la revendication 7 et un équipement source selon la revendication 13.

16. Programme d'ordinateur comprenant des instructions qui conduisent un équipement de restitution audio selon la revendication 7 à exécuter le procédé selon l'une des revendications 1 à 6.

17. Support d'enregistrement lisible par ordinateur, sur lequel est enregistré le programme d'ordinateur selon la revendication 16.

18. Programme d'ordinateur comprenant des instructions qui conduisent un équipement source selon la revendication 13 à exécuter le procédé selon l'une des revendications 8 à 12.

19. Support d'enregistrement lisible par ordinateur, sur lequel est enregistré le programme d'ordinateur selon la revendication 18.

## Patentansprüche

1. Verfahren zur Verwaltung eines Audiostroms, der von mindestens einem Audiowiedergabegerät auf eine Weise, die auf einen Referenztakt synchronisiert ist, gelesen wird, wobei das Audiowiedergabegerät einen Eingangspufferspeicher umfasst, wobei das Verfahren mindestens die folgenden Schritte umfasst, die in dem Audiowiedergabegerät implementiert werden:
- Empfangen des Audiostroms, wobei der Audiostrom in Form von Paketen vorliegt, wobei jedes Paket eine Folge von Audiosamples umfasst, die mit mindestens einer ersten Identifikationsinformation verknüpft sind, die charakteristisch für einen Zeitstempel des genannten Pakets ist;
- Abspielen der Audiosamples, die in jedem Paket enthalten sind;
wobei das Verfahren ferner die folgenden Schritte umfasst, die in der Audiowiedergabevorrichtung implementiert werden:
- Zerlegen jedes empfangenen Pakets in Blöcke von Audiosamples;
- Bestimmen mindestens einer zweiten Zeitstempelinformation, die mindestens einem Block von Audiosamples entspricht, und dies anhand der ersten Identifikationsinformation, die charakteristisch für einen Zeitstempel des Paket ist, aus dem der genannte Block extrahiert wird, und anhand einer Anzahl von Samples zwischen einem besonderen Sample des genannten Pakets und einem gegebenen Sample des genannten Blocks, wobei die zweite Zeitstempelinformation somit bestimmt wird durch:
Punkt 1: Berechnung des Versatzes zwischen dem besonderen Sample und dem gegebenen Sample;
Punkt 2: Multiplikation des beim Punkt 1 ermittelten Versatzes mit einem Konversionsverhältnis, um eine Anzahl von Samples in eine Zeitstempelinformation umzuwandeln;
Punkt 3: Addition des Ergebnisses des Punkts 2 zur ersten Zeitstempelinformation, um die zweite Zeitstempelinformation zu erhalten;
- Injizieren des Blocks in den Pufferspeicher, indem der genannte Block ans Ende des Pufferspeichers kopiert wird, wenn der Füllstand des Pufferspeichers unter einen gegebenen Schwellenwert fällt;
wobei das Verfahren die Schritte umfasst:
- Speichern einer Zeit, die durch den Referenztakt zu dem Zeitpunkt gegeben wird, zu dem das gegebene Sample des Blocks in den Pufferspeicher injiziert wird;
- Senden einer Nachricht, die mindestens eine Korrespondenzinformation zwischen der ersten Identifikationsinformation, die charakteristisch für einen Zeitstempel des genannten Pakets ist, und der gespeicherten Zeit umfasst, wobei die Korrespondenzinformation die genannte zweite Zeitstempelinformation umfasst, die dem genannten Block und der genannten gespeicherten Zeit entspricht.

2. Verfahren nach Anspruch 1, bei dem die Korrespondenzinformation aus dem Wert der genannten zweiten Identifikationsinformation und der genannten gespeicherten Zeit besteht.

3. Verfahren nach Anspruch 1, bei dem die Korrespondenzinformation aus einem Richtungskoeffizienten einer linearen Regressionsgeraden zwischen der genannten zweiten Information und der genannten gespeicherten Zeit besteht.

4. Verfahren nach einem der Ansprüche 1 bis 3, umfassend die folgenden zusätzlichen Schritte, die in dem Audiowiedergabegerät implementiert werden:
für mindestens ein von dem Audiowiedergabegerät empfangenes Paket N, Berechnen einer Identifikationsinformation, die charakteristisch für einen Zeitstempel ist, der für das folgende Paket N+1 erwartet wird, indem die Identifikationsinformation, die charakteristisch für einen Zeitstempel des Pakets ist, das soeben empfangen wurde, und seine Dauer addiert werden, und Vergleichen der genannten erwarteten Identifikationsinformation mit der Identifikationsinformation des Pakets N+1 bei dessen Empfang.

5. Verfahren nach Anspruch 4, bei dem, wenn die Identifikationsinformation des Pakets N+1 zeitlich nach der erwarteten Identifikationsinformation liegt, das Audiowiedergabegerät dann Kompensationssamples für eine Dauer spielt, die der Differenz zwischen der erwarteten Identifikationsinformation und der Identifikationsinformation des Pakets N+1 entspricht.

6. Verfahren nach Anspruch 5, bei dem die Kompensationssamples Stille und/oder Kopien der letzten gespielten Samples sind.

7. Audiowiedergabegerät, das geeignet ist, das Verfahren nach einem der Ansprüche 1 bis 6 durchzuführen.

8. Verfahren zur Verwaltung eines Audiostroms, der auf eine Weise, die auf einen Referenztakt synchronisiert ist, gelesen und durch mindestens ein Quellgerät übertragen wird, wobei das Verfahren mindestens die folgenden Schritte umfasst, die in dem genannten Quellgerät implementiert werden:
• Erster Schritt: Zerlegen des Audiostroms in Pakete, wobei jedes Paket eine Folge von Audiosamples umfasst;
• Zweiter Schritt: Zuordnen einer Identifikationsinformation, die charakteristisch für einen Zeitstempel des genannten Pakets ist, zu jedem Paket, wobei die Information folglich repräsentativ für die Zeit ist, zu der ein vorbestimmtes Audiosample des genannten Pakets von einem Audiowiedergabegerät gespielt werden sollte;
• Dritter Schritt: Empfangen einer Nachricht, die mindestens eine Korrespondenzinformation zwischen der Identifikationsinformation, die charakteristisch für einen Zeitstempel mindestens eines der Pakete ist, und einer durch den Referenztakt gegebenen Zeit, die charakteristisch für den Zeitpunkt ist, zu dem das vorbestimmte Audiosample des genannten Pakets in einen Pufferspeicher eines Audiowiedergabegeräts nach Anspruch 7 injiziert wurde;
• Vierter Schritt: abhängig von der genannten Korrespondenzinformation, Anpassen der Lesegeschwindigkeit des Audiostroms in Abhängigkeit von der genannten Korrespondenzinformation und/oder des folgenden Pakets vor dessen Senden.

9. Verfahren nach Anspruch 8, bei dem der Schritt des Anpassens des folgenden Pakets durch Anpassung der Anzahl der in dem Paket enthaltenen Audiosamples erfolgt.

10. Verfahren nach Anspruch 9, bei dem man die Anzahl der Samples anpasst, indem man Audiosamples aus dem genannten Paket entfernt oder man dem Paket Audiosamples hinzufügt.

11. Verfahren nach Anspruch 8 oder Anspruch 9, bei dem man das folgende Paket anpasst, indem man ein Resampling-Filter auf das genannte Paket anwendet.

12. Verfahren nach einem der Ansprüche 10 oder 11, bei dem man die Anzahl der Samples anpasst, indem man eine Paketgröße beibehält, die identisch zu der des Pakets ist, das zuvor übertragen wurde.

13. Quellgerät, das geeignet ist, das Verfahren nach einem der Ansprüche 8 bis 12 durchzuführen.

14. Anlage, umfassend mindestens ein erstes Audiowiedergerät nach Anspruch 7 und ein zweites Audiowiedergabegerät nach Anspruch 13, das ausgebildet ist, den Audiostrom zu dem genannten ersten Audiowiedergabegerät zu übertragen, wobei das zweite Audiowiedergabegerät selbst den genannten Strom anpasst, wenn das andere Audiowiedergabegerät diesen nicht mit der richtigen Geschwindigkeit liest.

15. Anlage, umfassend mindestens ein erstes Audiowiedergabegerät nach Anspruch 7 und ein Quellgerät nach Anspruch 13.

16. Computerprogramm, umfassend Anweisungen, die das Audiowiedergabegerät nach Anspruch 7 veranlassen, das Verfahren nach einem der Ansprüche 1 bis 6 auszuführen.

17. Computerlesbarer Aufzeichnungsträger, auf dem das Computerprogramm nach Anspruch 16 gespeichert ist.

18. Computerprogramm, umfassend Anweisungen, die ein Quellgerät nach Anspruch 13 dazu veranlassen, das Verfahren nach einem der Ansprüche 8 bis 12 auszuführen.

19. Computerlesbarer Aufzeichnungsträger, auf dem das Computerprogramm nach Anspruch 18 gespeichert ist.

## Claims

1. A method of managing an audio stream that is read by audio playback equipment in a manner that is synchronized on a reference clock, the audio playback equipment comprising an input buffer memory, the method comprising at least the following steps implemented in said piece of audio playback equipment:
receiving the audio stream, the audio stream being in the form of packets, each packet comprising a succession of audio samples associated with at least a first identification information characteristic of a timestamp of said packet;
playing the audio samples contained in each packet;
the method further comprising the following steps implemented in the audio playback equipment:
splitting each received packet into blocks of audio samples;
determining at least a second timestamp information corresponding at least to one block of audio samples, both on the basis of the first identification information characteristic of a timestamp of the packet from which the block in question is extracted and also on the basis of the number of samples between a particular sample of said packet and a given sample of said block, the second timestamp information being determined by :
Point 1: calculation off an offset between the particular sample and the given sample;
Point 2: multiplication of offset of point 1 by a conversion ratio for converting a number of samples into timestamp information;
Point 3: addition of the result of point 2 to the first timestamp information in order to obtain the second timestamp information;
injecting the block into the buffer memory by copying the block at the end of the buffer memory when reaching a predetermined threshold of available space in said buffer memory;
the method comprising the steps of:
- storing a time given by the reference clock at the moment at which the given sample of the block is injected in the buffer memory,
- sending a message including at least one correspondence information between the first identification information characteristic of a timestamp of said packet and the time stored , the correspondence information comprising said second identification information corresponding to the block and said time stored.

2. A method according to claim 1, wherein the correspondence information consists in the value of said second identification information and said stored time.

3. A method according to claim 1, wherein the correspondence information consists in the gradient of a linear regression line between said second identification information and said stored time.

4. A method according to one of claims 1 to 3, comprising the following additional steps implemented in the audio playback equipment:
for at least one packet N received by the audio playback equipment, calculating expected identification information characteristic of a timestamp expected for the following packet N+1, and adding together the identification information characteristic of a timestamp of the packet that has just been received and its duration; and
when the packet N+1 is received, comparing said expected identification information with the identification information of the packet N+1.

5. A method according to claim 4, wherein if the identification information of the packet N+1 is later than the expected identification information, then the audio playback equipment plays compensation samples for a duration corresponding to the difference between the expected identification information and the identification information of the packet N+1.

6. A method according to claim 5, wherein the compensation samples are silence and/or copies of the most recently played samples.

7. Audio playback equipment adapted to perform the method according to any of claims 1 to 6.

8. A method of managing an audio stream that is read in a manner that is synchronized on a reference clock and that is delivered via at least one piece of source equipment, the method comprising at least the following steps implemented in said source equipment:
First step: splitting the audio stream into packets, each packet comprising a succession of audio samples;
Second step: associating each packet with identification information characteristic of a timestamp of said packet, which information is thus representative of the time at which a predetermined audio sample of said packet should be played by audio playback equipment;
Third step: receiving a message comprising at least correspondence information about correspondence between the identification information characteristic of a timestamp of at least one of the packets and the time given by the reference clock that is characteristic of the moment at which the predetermined audio sample of said packet was injected in the buffer memory of an audio playback equipment according to claim 7;
Fourth step: as a function of said correspondence information, adjusting the speed at which the audio stream is read as a function of said correspondence information and/or adjusting the following packet before sending it.

9. A method according to claim 8, wherein the step of adjusting the following packet is performed by adjusting the number of audio samples contained in the packet.

10. A method according to claim 9, wherein the number of samples is adjusted by removing audio samples from said packet or by adding audio samples thereto.

11. A method according to claim 8 or claim 9, wherein the following packet is adjusted by applying a resampling filter to said packet.

12. A method according to claim 10 or claim 11, wherein the number of samples is adjusted while conserving a packet size that is identical to the size of the packet that was delivered previously.

13. Source equipment adapted to perform the method according to any of claims 8 to 12.

14. An installation comprising at least one first piece of audio playback equipment according to claim 7 and a second piece of audio playback equipment according to claim 13 configured to deliver the audio stream to said first piece of audio playback equipment, the second piece of audio playback equipment itself adjusting said stream if the other piece of audio playback equipment is not reading it at the proper speed.

15. Installation comprising at least one first piece of audio playback equipment adapted to perform the method according to claim 7 and a source equipment according to claim 13.

16. A computer program including instructions for causing audio playback equipment according to claim 7 to execute the method according to any of claims 1 to 6.

17. A computer readable storage medium storing the computer program according to claim 16.

18. A computer program including instructions for causing source equipment according to claim 13 to execute the method according to any of claims 8 to 12.

19. A computer readable storage medium storing the computer program according to claim 18.
